# EUROPÄISCHE PATENTANMELDUNG

(11) **EP 0 638 522 A1**
(43) Veröffentlichungstag der Anmeldung: **15.02.1995**
(21) Anmeldenummer: 94111825.9
(22) Anmeldetag: 29.07.1994
(51) Int. Cl.: C02F 1/46, C25B 1/28, C02F 1/72, C02F 1/70

(54) **Verfahren zum Abbau von oxidierbaren und reduzierbaren Verbindungen in Prozess-und Abwässern**

(30) Priorität: 07.08.1993 DE 4326542
(71) Anmelder: BASF Aktiengesellschaft, D-67063 Ludwigshafen (DE)
(72) Erfinder: Meyer, Dr. Joachim, 67133 Maxdorf (DE); Habermann, Dr. Wolfgang, 55122 Mainz (DE); Wolf, Dr. Hans-Josef, 67133 Maxdorf (DE); Graf, Dr. Holger, 68239 Mannheim (DE); Schmidt, Detlev, 67133 Maxdorf (DE); Diehl, Theodor, 67063 Ludwigshafen (DE)

(57) **Zusammenfassung**

Verfahren zum Abbau von oxidierbaren und reduzierbaren Verbindungen in Prozeß- und Abwässern mit einer zweigeteilten Elektrolysezelle in der man in Gegenwart von Sulfaten oder Schwefelsäure und Stickstoff-Kohlenstoffgruppen-haltigen und/oder Kohlenstoff-Schwefelgruppen-haltigen und/oder Kohlenstoff-Stickstoff-Schwefelgruppen-haltigen Verbindungen Peroxosulfate oder Peroxoschwefelsäuren erzeugt und diese direkt in der Elektrolysezelle oder in einem nachgeschalteten Reaktor mit dem oxidierbaren Substanzen umsetzt. Gleichzeitig werden an der Kathode, die aus einem Metall besteht, welches schwer lösliche Metallchloride bildet, die reduzierbaren Verbindungen abgebaut. Das Abwasser kann im Kreislauf von der Kathodenkammer oder in der Anodenkammer durch die Kathodenkammer geführt werden bis die oxidierbaren und reduzierbaren Verbindungen konditioniert oder abgebaut sind.

## Beschreibung

Die vorliegende Erfindung betrifft ein verfahren zum Abbau von oxidierbaren und reduzierbaren Verbindungen in Prozeß- und Abwässern in Gegenwart von Sulfaten und Stickstoff-Kohlenstoffgruppen-haltigen Verbindungen. In der Anodengrenzschicht werden in den sulfathaltigen Abwässern Peroxosulfate und Peroxoschwefelsäuren gebildet, die durch eine indirekte Oxidation die oxidierbaren Verbindungen abbauen. Im Kathodenraum erfolgt der Abbau von reduzierbaren Verbindungen an einer Metallkathode, die schwerlösliche Metallchloride bildet, durch direkte Reduktion. Das Prozeß- oder Abwasser kann beim Abbau die Elektrolysezelle zuerst durch den Anoden- und anschließend den Kathodenraum oder auch in umgekehrter Richtung durchströmen.

Beim elektrochemischen Abbau von oxidierbaren Verbindungen können diese direkt an der Anode oder indirekt durch die in der Anodengrenzschicht entstehenden Oxidationsmittel abgebaut werden. Zur Oxidation setzt man Elektrodenmaterialien ein, die eine hohe Sauerstoffübberspannung aufweisen, wie z. B. Bleidioxid, Mangandioxid, Zinndioxid und glattes Platinblech. Probleme treten bei der direkten anodischen Oxidation dadurch auf, daß nur gut dissoziierbare anionische Verbindungen im elektrischen Feld in die Anodengrenzschicht wandern und an der Anode oxidiert werden können, während alle anderen Verbindungen durch Diffusion in die Grenzschicht der Anodenoberfläche gelangen, wodurch sich unzureichende Stromausbeuten von ≦ 15 % bei der direkten anodischen Oxidation ergeben. Günstiger ist deshalb eine indirekte anodische Oxidation bei der das Oxidationsmittel in der Anodengrenzschicht erzeugt und anschließend mit den zu oxidierenden Verbindungen umgesetzt wird. Das in der Anodengrenzschicht anfallende Oxidationsmittel wird an der Anode nach seiner Reduktion ständig wieder regeneriert und wirkt so als Mediator bei der Oxidation. Als Oxidationsmittel, die in der Grenzschicht erzeugt werden können, kommen z. B. Halogene, Wasserstoffperoxid, Ozon, Hydroxylradikale und Peroxosulfate bzw. Peroxoschwefelsäuren in Betracht. Von diesen Oxidationsmitteln sind Ozon, Peroxosulfate, Peroxoschwefelsäuren und Hydroxylradikale bevorzugt, da Wasserstoffperoxid und Halogene zur Bildung unerwünschter halogenorganischer Verbindungen führen. Ozon und Hydroxylradikale haben den Nachteil, daß ihre Löslichkeit und Stabilität begrenzt ist, so daß sie leicht unter Sauerstoffabspaltung zerfallen. Außerdem treten bei Oxidationen mit Ozon und Hydroxylradikalen Stoffaustauschprobleme auf, die sich negativ auf die Stromausbeute auswirken. Peroxosulfate und Peroxoschwefelsäuren können nur an glatten Platinelektroden und nicht an Metalloxidelektroden erzeugt werden. In verdünnten Natriumsulfatlösungen oder Schwefelsäuren von ≦ 25 Gew.% werden Peroxosulfate und Peroxoschwefelsäuren auch an Platinanoden nur mit Stromausbeuten von ≦ 1 % erhalten. Eine Ausnahme bilden verdünnte Kalium- und Ammoniumsulfatlösungen in denen Peroxidsulfat mit Stromausbeuten von 5 bis 18 % erzeugt werden können. In der chemischen Industrie bestehen die meisten Abwässer in der Regel aus verdünnten Natriumsulfatlösungen oder sind schwefelsäurehaltig, so daß es bisher nicht möglich war, in der Anodengrenzschicht Peroxosulfate und Peroxoschwefelsäuren zu erzeugen und die Abwässer kostengünstig abzubauen. Bei der anodischen Oxidation dieser Abwässer waren deshalb die Stromausbeuten (< 15 %) völlig unzureichend. Ein weiterer Nachteil war, das halogenorganische Verbindungen in verdünnten sulfathaltigen Abwässern nicht abgebaut werden und die Neubildung von halogenorganischen Verbindungen begünstigt ist.

Der kathodische Abbau von reduzierbaren, Verbindungen insbesondere von halogenorganischen Verbindungen, ist in Abwässern nur durch direkte kathodische Reduktion möglich, da hier geeignete Redoxmediatoren nicht zur Verfügung stehen. Als Elektrodenmaterialien verwendet man Kathoden, die eine hohe Wasserstoffüberspannung aufweisen wie z. B. Amalgame und Cadmium. Ungünstig bei diesen Elektrodenmaterialien ist, daß sich durch die hohe Wasserstoffüberspannung dicke Grenzschichten ausbilden, wodurch Diffusionsbarrieren entstehen, die den Stoffaustausch behindern und damit die Stromausbeuten senken. Weiterhin sind Metalle wie Quecksilber und Cadmium aufgrund ihrer Toxizität im Abwasser unerwünscht.

Aufgabe der vorliegenden Erfindung ist es, biologisch schwer abbaubare und halogenorganische Verbindungen in Prozeß- und Abwässern durch eine anodische Oxidation und kathodische Reduktion mit geringem Energieaufwand kostengünstig abzubauen oder in biologisch abbaubare Verbindungen zu überführen.

Die Aufgabe wurde erfindungsgemäß dadurch gelöst, daß die Prozeß- und Abwässer in einer durch eine Ionenaustauschermembran oder ein Diaphragma zweigeteilten Elektrolysezelle an der Anode, die eine hohe Sauerstoffüberspannung aufweist, in der Weise elektrolysiert werden, daß man in der sauren Grenzschicht der Anode in Gegenwart von Sulfaten und/oder Schwefelsäure und Stickstoff-Kohlenstoffgruppen-haltigen und/oder Kohlenstoff-Schwefelgruppen-haltigen und/oder Kohlenstoff-Stickstoff-Schwefelgruppen-haltigen Verbindungen Peroxosulfate oder Peroxoschwefelsäuren erzeugt und mit diesen direkt in der Elektrolysezelle oder in einem nachgeschalteten Reaktor, die im Abwasser enthaltenen Verbindungen durch Oxidation abbaut, wobei das bei der Umsetzung gebildete Sulfat an der Anode wieder zu Peroxosulfaten oder Peroxoschwefelsäuren regeneriert wird und an der Kathode, die aus einem Metall oder einer Metall-Legierung besteht, welche schwer lösliche Halogensalze bildet und eine hohe Wasserstoffüberspannung aufweist, die im Abwasser enthaltenen Verbindungen reduziert, wobei das Abwasser im Kreislauf von der Kathodenkammer durch die Anodenkammer in die Kathodenkammer oder von der Anodenkammer durch die Kathodenkammer in die Anodenkammer zurückgeführt werden kann bis die oxidierbaren und reduzierbaren Verbindungen konditioniert oder abgebaut sind.

Als Anodenmaterialien mit hoher Sauerstoffüberspannung kommen vorzugsweise glattes Platin auf Trägermaterialien aus Titan, Niob oder Tantal oder Platin auf Trägern aus Legierungen dieser Metalle in Betracht. Besonders bevorzugt ist glattes Platinblech auf Tantal oder Niob-Tantal-Legierungen.

Zur Bildungen von Peroxosulfaten und Peroxoschwefelsäuren in der Anodengrenzschicht bei der Verwendung von natriumsulfat- und schwefelsäurehaltigen Prozeß- und Abwässern werden dem Prozeß- oder Abwasser geringen Mengen an Stickstoff-Kohlenstoffgruppenhaltigen Verbindungen zugesetzt. Als Stickstoff-Kohlenstoffgruppen-haltige Verbindungen sind, z. B. Pyridin und/oder Derivate des Pyridins und/oder Chinolin und/oder Chinolinderivate und/oder kondensierte Ringsysteme des Pyridins und/oder Pyrimidin und/oder Pyrimidinderivate und/oder Pyridazinderivate und/oder Pyrazon und/oder Pyrazonderivate geeignet. Bevorzugt sind die benzolkondensierten Ringsysteme des Pyridins wie z.B. Chinolin, Isochinolin, 1,2-Dihydrochinolin, Chinaldin, Chinolin-8-Sulfonsäure, 3-Chlorchinolin, Aminochinoline und Hydrorychinoline.

Als Kohlenstoff-Schwefelgruppen-haltige oder Kohlenstoff-Stickstoff-Schwefelgruppen-haltige Verbindungen kommen z.B. Thiocyanate, Thiocyansäure, Thiocyansäureester, Thioether, Dirhodan, Thioaldehyde, Thiocarbonsäuren, Thiocarbonsäureester, Thioketale, Thioamide und Dithioverbindungen in Betracht.

Weiterhin können Thioglykole, Thiomoroholin und Rhodanin eingesetzt werden.

Bevorzugt verwendet man chlorierte Derivate des Pyridins und/oder Chinolins und/oder Pyrimidins und/oder Pyridazins und/oder Pyrazins und/oder Pyrazons in Kombination mit organischen Thioverbindungen, wobei dem Prozeß- oder Abwasser zusätzlich geringe Mengen an Chloriden zugesetzt werden können. Zum Schutz der Anode und der Verminderung dar Korrosion verwendet man die chlorierten Derivate des Pyridins und/oder Pyrimidins und/oder Pyridazins und/oder Pyrazins und/oder Pyrazons und/oder Thiocyanate in Kombination mit Hexamethylentetramin und organischen Thioverbindungen.

Als besonders vorteilhafte organische Thioverbindungen haben sich die Abkömmlinge der Thiokohlensäure wie z. B. Thioharnstoff, Thiosemicarbazid Thiocarbohydrazid, Bis-thioharnstoff, Thiosemicarbazon, Dithizon und S-Alkyl-isothiuroniumsalze erwiesen.

Die Konzentration an Stickstoff Kohlenstoffgruppen-haltigen Verbindungen im Prozeß- oder Abwasser kann 0,5 bis 5000 ppm, vorzugsweise 50 bis 800 ppm betragen.

Der Zusatz an Kohlenstoff-Schwefelgruppen-haltigen Verbindungen und/oder Chloriden sollte zwischen 2 und 5000 ppm vorzugsweise 50 bis 500 ppm liegen.

Der Sulfatgehalt oder Schwefelsäuregehalt des Abwassers kann 0,1 bis 80 Gew.-%, vorzugsweise 2 bis 20 Gew.-% beim elektrochemischen Abbau betragen. Besonders günstig sind Sulfatkonzentrationen zwischen 10 und 18 Gew.-%.

Geeignete Kathodenmaterialien sind Elektroden, die mit Chlorid schwer lösliche Metallchloride bilden. Es kommen Blei oder Silber oder Blei-Silber-, Blei-Silber-Kupfer-, Blei-Kupfer und Silber-Kupferlegierungen in Betracht. Bevorzugt sind Silber-Kupferlegierungen mit einem Kupferanteil von 30 bis 70 Gew.%.

Zur Trennung des Anoden- und Kathodenraumes der Elektrolysezelle werden Kationenaustauschermembranen oder Diaphragmen verwendet.

Als Kationenaustauschermembranen werden bevorzugt Polymere auf Basis von perfluorierten Olefinen oder Copolymere aus Tetrafluorethylen mit ungesättigten perfluorierten Ethern oder Copolymere aus Styrol und Divinylbenzol verwendet, die als ladungstragende Gruppen Sulfonsäure- und Carboxylgruppen oder nur Sulfonsäuregruppen enthalten. Kationenaustauschermembranen, die nur Sulfonsäuregruppen enthalten, sind wesentlich beständiger gegenüber Einlagerungen und Verschmutzungen durch mehrwertige Kationen und daher für die Prozeß- und Abwasserelektrolyse bevorzugt geeignet.

Zur Trennung des Anoden- und Kathodenraumes können auch Diaphragmen verwendet werden. Geeignete Diaphragmen sind solche aus hydrophilierten perfluorierten und/oder perchlorierten Kunststoffen oder Sinterkeramik auf Basis von Aluminiumoxid, und/oder Zirkonoxid und/oder Titanoxid. Bevorzugt eignen sich Diaphragmen, die aus Polymeren auf der Basis von perfluorierten Olefinen bestehen und mit Zirkonoxid hydrophiliert sind.

Den elektrochemischen Abbau der oxidierbaren und reduzierbaren Verbindungen im Prozeß- und Abwasser führt man in der Weise durch, daß die Elektrolysezelle als kontinuierliche Kaskade betrieben wird, wobei das Abwasser jede einzelne Zelle zunächst vom Kathoden - zum Anodenraum oder vom Anoden - zum Kathodenraum durchströmt und dann in die nächste Elektrolysezelle eintritt oder die gesamte Kaskade auf der Anodenseite und anschließend auf der Kathodenseite durchströmt. Als vorteilhaft hat es sich erwiesen, wenn das Prozeß- oder Abwasser zunächst die Anodenkammer und anschließend die Kathodenkammer durchströmt. Bei dieser Betriebsweise wird außerdem vermieden, daß die nicht ungesetzten Peroxosulfate oder Peroxsulfate in das Abwasser oder die Prozeßströme gelangen.

Die nicht umgesetzten Peroxosulfate oder Peroxoschwefelsäuren können außerdem in einem nachgeschalteten Schritt in einem Reaktor, z. B. einem Rührkessel, thermisch bei Temperaturen zwischen + 60 und + 100 °C und/oder katalytisch durch eine homogene Katalyse in Gegenwart von Schwermetallkationen, z. B. Eisenionen und/oder durch eine heterogene Katalyse an mit Metalloxiden aktivierten Kohlen oder Graphiten umgesetzt und abgebaut werden.

Der elektrochemische Abbau der oxidierbaren und reduzierbaren Verbindungen kann kontinuierlich oder im Batchbetrieb durchgeführt werden. Beim kontinuierlichen Betrieb werden die Elektrolysezellen als Kaskade in Reihe geschaltet.

Die Anoden und Kathoden, an denen sich Gase entwickeln, kann man in Form von Gasliftelektroden verwenden. Bei diesen Elektroden werden die Auftriebskräfte genutzt, die sich im Elektrolyten durch die Gasbeladung einstellende Dichteunterschiede gegenüber den gasfreien Elektrolyten einstellen. Die Auftriebskräfte werden durch konstruktive Gestaltung der Elektroden und Umlaufsysteme so gelenkt, daß eine gerichtete Elektrolytströmung mit minimalem Gasanteil im Elektrodenraum entsteht. Die Strömungsgeschwindigkeiten sollten ≧ 15 cm/s, vorzugsweise 30 bis 100 cm/s betragen. Besonders günstig ist dabei die Unterteilung der Elektrodenzwischenräume in vertikale, vom Elektrolyten durchströmte Kanäle. Auf diese Weise wird eine Minimierung des gasblasenbedingten Spannungsabfalls erreicht.

Der elektrochemische Abbau kann bei Stromdichten von 1 bis 25 kA/m² durchgeführt werden. Vorzugsweise kommen Stromdichten von 5 bis 15 kA/m² in Betracht.

Die Temperatur beim elektrochemischen Abbau sollte -5 bis 45 °C, vorzugsweise 10 bis +30 °C betragen. Es ist aber auch möglich, insbesondere bei höheren Sulfatkonzentrationen die Elektrolyse bei Temperaturen bis zu +100 °C durchzuführen.

Das erfindungsgemäße Verfahren eignet sich insbesondere zum elektrochemischen Abbau von schwer abbaubaren und halogenorganischen Verbindungen in Prozeß- und Abwässern. Durch die Bildung von Persulfaten und Peroxoschwefelsäuren in der Anodengrenzschicht in Gegenwart von Sulfat und Stickstoff-Kohlenstoff-haltigen und/oder Kohlenstoff-Schwefelgruppen-haltigen Verbindungen ist es möglich den Abbau der oxidierbaren Verbindungen sehr effektiv mit geringem Kostenaufwand durchzuführen. Die Verwendung von Kathodenmaterialien, deren Metalle schwer lösliche Metallchloride bilden, ermöglicht es halogen-organische Verbindungen ebenfalls mit hohen Stromausbeuten abzubauen.

### Beispiel 1

In einer zweigeteilten Elektrolysezelle, deren Anoden- und Kathodenraum durch eine Kationenaustauschermembran vom Typ Nafion 324 (Du Pont) getrennt ist, wird eine Anode aus Platinblech auf einem Tantalträger und eine Kathode aus einer Kupfer-Silberlegierung (45 Gew.% Kupfer, 55 Gew.% Silber) eingebaut.

Im Kathodenraum der Elektrolysezelle wird wässrige 10 Gew.%ige Schwefelsäure eingesetzt, während im Anodenraum die folgenden Elektrolyte getestet werden:
1. 15 Gew.%ige Schwefelsäure
2. 15 Gew.%ige Schwefelsäure + 500 ppm Thiocyanat
3. 15 Gew.%ige Schwefelsäure mit 500 ppm Thiocyanat und 100 ppm Thioharnstoff
4. 15 Gew.%ige wässrige Natriumsulfatlösung
5. 15 Gew.%ige wässrige Natriumsulfatlösung mit 500 ppm Thiocyanat
6. 15 Gew.%ige wässrige Natriumsulfatlösung mit 500 ppm Thiocyanat und 100 ppm Thioharnstoff
7. 15 Gew.%ige wässrige Natriumsulfatlösung mit 500 ppm Chinolin und 100 ppm Thioharnstoff
8. 15 Gew.%ige Ammoniumsulfatlösung
9. 15 Gew.%ige Ammoniumsulfatlösung mit 500 ppm Thiocyanat und 100 ppm Thioharnstoff
10. 10 Gew.%ige Kaliumsulfatlösung
11. 10 Gew.%ige Kaliumsulfatlösung mit 500 ppm Thiocyanat und 100 ppm Thioharnstoff
Die Elektrolyse wird unter den folgenden Prozeßbedingungen durchgeführt:
- Temperatur +28 bis 30 °C
- anodische Stromdichte 5 kA/m²
- Stromangebot 30 Ah/l
Nach der Elektrolyse wurden in den einzelnen Elektrolyten die aufgeführten Gehalte an Peroxo-Verbindungen als S₂O₈²⁻ berechnet und Stromausbeuten ermittelt:

| Elektrolyt | SO₂O₈-Gehalt | Stromausbeute |
|---|---|---|
| Nr | g/l | % |
| 1 | <1 | <1 |
| 2 | ∼30 | ∼28 |
| 3 | ∼53,7 | 50 |
| 4 | <1 | <1 |
| 5 | ∼32 | ∼30 |
| 6 | 59 | 55 |
| 7 | 68,7 | 64 |
| 8 | 9,6 | 9 |
| 9 | 81 | 78 |
| 10 | 19,3 | 18 |
| 11 | 77,6 | 85 |

Aus den Ergebnissen wird deutlich, daß bei der Elektrolyse verdünnter Schwefelsäure und Natriumsulfatlösung kaum Peroxoverbindungen entstehen (Versuch 1 und 4), während in Ammonium- und Kaliumsulfatlösungen Peroxoverbindungen mit Stromausbeuten von ≦ 20 % erhalten werden (Versuche 6 und 8). Die Zusätze von Chinolin oder Thiocyanat führen zu einer Erhöhung der Stromausbeute in Schwefelsäure auf ∼ 28 % und in Natriumsulfatlösung auf ∼ 30 % (Elektrolyt 2 und 5), während der gleichzeitige Zusatz von Thioharnstoff Stromausbeuten von ≧ 50 % für die S₂O₈⁻⁻-Bildung ergibt.

Verwendet man an Stelle einer Platinanode Elektroden aus Zinndioxid, Bleidioxid und Mangandioxid, erhält man ohne Zusätze zu den Elektrolyten sowie mit den in den Versuchen 2, 3, 5, 6, 7, 9 und 11 angeführten Zusätzen Stromausbeuten für die S₂O₈⁻⁻-Bildung, die deutlich unter 1 % liegen.

Dieses Beispiel zeigt, daß Peroxoverbindungen nur an glatten Platinanoden und nicht an Metalloxidelektroden in Gegenwart von Stickstoff-Kohlenstoff-haltigen Verbindungen und/oder Kohlenstoff-Schwefelgruppen-haltigen und/oder Kohlenstoff-Stickstoff-Schwefelgruppen-haltigen Verbindungen mit technisch interessanten Stromausbeuten gebildet werden.

### Beispiel 2

In eine Elektrolysezelle wie in Beispiel 1 wird in den Anodenraum ein Abwasser aus der Pflanzenschutzmittelproduktion mit der folgenden Zusammensetzung eingesetzt.
- 19 Gew.% Natriumsulfat
- 0,1 Gew.% Natriumnitrat
- 0,003 Gew.% Natirumchlorid
- 15,2 g/l CSB
- 0,22 g/l Wirkstoff
- 0,05 g/l Chinolin
- 0,19g/l AOX
Der pH-Wert Lösung beträgt etwa 2
Im Kathodenraum wird als Hilfselektrolyt 10 Gew.%ige, wäßrige Schwefelsäure verwendet.

Die Elektrolyse wird bei einer Zellspannung von 4,1 V und einer Stromdichte von 5 kA/m² Anodenfläche durchgeführt. Nach der Elektrolyse wird das Abwasser zusätzlich 1 h bei + 85 °C temperiert um überschüssige Peroxosulfate umzusetzen.

In Abhängigkeit vom Stromangebot werden die Abwasserinhaltsstoffe wie folgt abgebaut:

| Stromangebot Ah/l | CSB mg/l | Wirkstoff mg/l | AOX mg/l | Stromausbeute bezogen auf CSB % |
|---|---|---|---|---|
| 0 | 15200 | 220 | 190 | 0 |
| 16,6 | 8300 | 103 | 96,8 | ∼70 |
| 41,66 | 2300 | 39 | 51 | ∼51 |
| 100 | <100 | <1 | <5 | ∼25 |

Setzt man dem Abwasser bei der Oxidation zusätzlich 250 ppm Thioharnstoff zu, erhält man folgende Ergebnisse:

| Stromangebot Ah/l | CSB mg/l | Wirkstoff mg/l | AOX mg/l | Stromausbeute bezogen auf CSB % |
|---|---|---|---|---|
| 0 | 15200 | 220 | 190 | 0 |
| 16,6 | 7700 | 94,8 | 90 | ∼75 |
| 41,66 | 800 | 26 | 26 | ∼58 |
| 100 | <100 | <1 | <5 | ∼25 |

Elektrolysiert man das Abwasser ohne Zusatz von Chinolin und Thioharnstoff, werden folgende Resultate erhalten:

| Stromangebot Ah/l | CSB mg/l | Wirkstoff mg/l | AOX mg/l | Stromausbeute bezogen auf CSB % |
|---|---|---|---|---|
| 0 | 15200 | 220 | 190 | 0 |
| 16,6 | 1230 | 170 | 150 | ∼30 |
| 41,66 | 10980 | 110 | 96 | ∼17 |
| 100 | 9230 | 6 | 38 | ∼10 |

Führt man die Elektrolyse bei Abwesenheit von Sulfat durch, erhält man Stromausbeuten, die nach einem Stromangebot von 16,6 Ah unter 16 % liegen. Das Beispiel zeigt, daß der Zusatz von Stickstoff-Kohlenstoffgruppenhaltigen Verbindungen und Kohlenstoff-Schwefelgruppen-haltigen Verbindungen zu einer wesentlichen Verbesserung des Abbaus und der Stromausbeuten bei der elektrochemischen Oxidation führt.

### Beispiel 3

In einer Elektrolysezelle wie in Beispiel 1 wird ein Abwasser aus der Pflanzenschutzmittelproduktion, bestehend aus
- 19 Gew.% Natriumsulfat
- 0,1 Gew.% Natriumnitrat
- 0,003 Gew.% Natriumchlorid
- 15,2 g/l CSB
- 0,22 g/l Wirkstoff
- 0,19 g/l AOX
- 0,05 g/l Kaliumthiocyanat
- 0,02 g/l Thioharnstoff
eingesetzt, wobei das Abwasser im Kreislauf den Anoden- und Kathodenraum durchströmt. Die Elektrolyse wird bei einem pH-Wert von 2, einer Stromdichte von 5 kA/m² und einer Zellspannung von 4,08 V durchgeführt.

Es werden folgende Resultate erhalten:

| Stromangebot Ah/l | CSB mg/l | Wirkstoff mg/l | AOX mg/l | Stromausbeute bezogen auf CSB % |
|---|---|---|---|---|
| 0 | 15200 | 220 | 190 | 0 |
| 16,6 | 7700 | 49 | 42 | ∼75 |
| 41,66 | 790 | 7 | 6 | ∼57 |
| 100 | <100 | <1 | <5 | ∼25 |

Elektrolysiert man das Abwasser nur im Anodenraum der Elektrolysezelle und verwendet im Kathodenraum wässrige Schwefelsäure als Leitelektrolyt, ändert sich der Abbau in Abhängigkeit vom Stromangebot wie folgt:

| Stromangebot Ah/l | CSB mg/l | Wirkstoff mg/l | AOX mg/l | Stromausbeute bezogen auf CSB % |
|---|---|---|---|---|
| 0 | 15200 | 220 | 190 | 0 |
| 16,6 | 7810 | 79 | 82 | ∼74 |
| 41,66 | 880 | 17 | 16 | ∼57 |
| 100 | <100 | <1 | <1 | ∼25 |

Aus dem Beispiel wird deutlich, daß der Wirkstoff und AOX bei der Verfahrensvariante bei der das Abwasser zunächst den Anoden- und anschließend den Kathodenraum durchströmt, besser abgebaut ist.

Verwendet man an Stelle der Kupfer-Silber-Kathode eine Elektrode aus Cadmium und durchströmt die Zelle vom Anoden- zum Kathodenraum, so ergeben sich folgende Veränderungen im Abbau.

Hierbei zeigt sich, daß die Verwendung von Metallen, die schwer lösliche Chloride bilden, als Kathoden für den Abbau von AOX, günstiger sind als die bisher verwendeten Elektroden mit hoher Sauerstoffüberspannung.

## Patentansprüche

1. Verfahren zum Abbau von oxidierbaren und reduzierbaren Verbindungen in Prozeß- und Abwässern in einer durch eine Ionenaustauschermembran oder ein Diaphragma zweigeteilten Elektrolysezelle mit einer Anode, die eine hohe Sauerstoffüberspannung aufweist, dadurch gekennzeichnet, daß man in der sauren Grenzschicht der Anode in Gegenwart von Sulfaten und/oder Schwefelsäure und Stickstoff-Kohlenstoffgruppen-haltigen und/oder Kohlenstoff-Schwefelgruppen-haltigen und/oder Kohlenstoff-Stickstoff-Schwefelgruppen-haltigen Verbindungen Peroxosulfate und/oder Peroxoschwefelsäuren erzeugt und mit diesen direkt in der Elektrolysezelle, oder in einem nachgeschalteten Reaktor die im Abwasser enthaltenen Verbindungen durch Oxidation abbaut, wobei das bei der Umsetzung gebildete Sulfat an der Anode wieder zu Peroxosulfaten regeneriert wird und an der Kathode die aus einem Metall oder einer Metall-Legierung besteht, welche schwer lösliche Halogensalze bildet und eine hohe Wasserstoffüberspannung aufweist, die im Abwasser enthaltenen Verbindungen reduziert, wobei das Abwasser im Kreislauf von der Kathodenkammer durch die Anodenkammer in die Kathodenkammer oder von der Anodenkammer durch die Kathodenkammer in die Anodenkammer zurückgeführt werden kann bis die oxidierbaren und reduzierbaren Verbindungen konditioniert oder abgebaut sind.

2. Verfahren zum Abbau von oxidierbaren und reduzierbaren Verbindungen nach Anspruch 1, dadurch gekennzeichnet, daß als Anodenmaterialien glattes Platin auf Titan, Niob oder Tantal verwendet werden.

3. Verfahren zum Abbau von oxidierbaren und reduzierbaren Verbindungen nach Anspruch 1 und 2, dadurch gekennzeichnet, daß als Stickstoff-Kohlenstoffgruppen-haltige Verbindungen stickstoffhaltige Heteroaromaten verwendet werden.

4. Verfahren zum Abbau von oxidierbaren und reduzierbaren Verbindungen nach Anspruch 1 bis 3, dadurch gekennzeichnet, daß als stickstoffhaltige Heteroaromaten Pyridin und/oder Chinolin und/oder Derivate des Pyridins und/oder kondensierte Ringsysteme des Pyridins und/oder Pyrimidins und/oder Pyrimidinderivate und/oder Pyridazins und/oder Pyridazinderivate und/oder Pyrazons und/oder Pyrazonderivate verwendet werden.

5. Verfahren zum Abbau von oxidierbaren und reduzierbaren Verbindungen nach Anspruch 1 bis 4, dadurch gekennzeichnet, daß man als Kohlenstoff-Schwefelgruppen-haltige oder Kohlenstoff-Stickstoff-Schwefelgruppen-haltige Verbindungen Thiocyanate, Thiocyansäure, Thiocyansäureester, Thioether, Dirhodan, Thioaldehyde, Thiocarbonsäuren, Thiocarbonsäureester, Thioketale, Thioamide und Dithioverbindungen verwendet.

6. Verfahren zum Abbau von oxidierbaren und reduzierbaren Verbindungen nach Anspruch 1 bis 5, dadurch gekennzeichnet, daß als organische Thioverbindungen bevorzugt die Abkömmlinge der Thiokohlensäure wie z. B. Thioharnstoff, Thiosemicarbazid und Thiocarbohydrazid verwendet werden.

7. Verfahren zum Abbau von oxidierbaren und reduzierbaren Verbindungen nach Anspruch 1 bis 6, dadurch gekennzeichnet, daß man die Stickstoff-Kohlenstoffgruppen-haltigen Heteroaromaten in Kombination mit organischen Thioverbindungen und/oder Chloriden einsetzt.

8. Verfahren zum Abbau von oxidierbaren und reduzierbaren Verbindungen nach Anspruch 1 bis 7, dadurch gekennzeichnet, daß man chlorierte Derivate des Pyridins und/oder Chinolins und/oder Pyrimidins und/oder Pyridazins und/oder Pyrazins und/oder Pyrazons in Kombination mit organischen Thioverbindungen verwendet.

9. Verfahren zum Abbau von oxidierbaren und reduzierbaren Verbindungen nach Anspruch 1 bis 8, dadurch gekennzeichnet, daß als Kathodenmaterialien Blei, Blei-Silber- oder Blei-Kupfer- oder Silber-Kupferlegierungen verwendet werden.

10. Verfahren zum Abbau von oxidierbaren und reduzierbaren Verbindungen nach Anspruch 1 bis 9, dadurch gekennzeichnet, daß das Prozeß- oder Abwasser 50 bis 800 ppm Stickstoff-Kohlenstoffgruppen-haltige Verbindungen und 50 bis 500 ppm Kohlenstoff-Schwefelgruppen-haltigen Verbindungen enthält.

11. Verfahren zum Abbau von oxidierbaren und reduzierbaren Verbindungen nach Anspruch 1 bis 10, dadurch gekennzeichnet, daß das Prozeß- oder Abwasser bei der elektrochemischen Spaltung 2 bis 20 Gew.-% Sulfat oder Schwefelsäure enthält.

12. Verfahren zum Abbau von oxidierbaren und reduzierbaren Verbindungen nach Anspruch 1 bis 11, dadurch gekennzeichnet, daß die Elektrolyse als kontinuierliche Kaskade betrieben wird, wobei das Abwasser jede einzelne Zelle zunächst vom Kathoden - zum Anodenraum oder vom Anoden - zum Kathodenraum durchströmt und dann in die nächste Elektrolysezelle eintritt oder die gesamte Kaskade auf der Kathodenseite und anschließend auf der Anodenseite oder die gesamte Kaskade auf der Anodenseite und anschließend auf der Kathodenseite durchstromt.

13. Verfahren zum Abbau von oxidierbaren und reduzierbaren Verbindungen nach Anspruch 1 bis 12, dadurch gekennzeichnet, daß der elektrochemische Abbau bei Stromdichten von 1 bis 50 kA/m², vorzugsweise 5 bis 15 kA/m² durchgeführt wird.

14. Verfahren zum Abbau von oxidierbaren und reduzierbaren Verbindungen nach Anspruch 1 bis 13, dadurch gekennzeichnet, daß der elektrochemische Abbau bei Temperaturen von -5 bis +45 °C durchgeführt wird.
